# EUROPEAN PATENT APPLICATION

(11) **EP 2 164 024 A1**
(43) Date of publication of application: **17.03.2010**
(21) Application number: 08305552.5
(22) Date of filing: 15.09.2008
(51) Int. Cl.: G06K 7/12, G06K 19/077, G06K 19/14

(54) **Marking of electronic device comprising an apparent component**

(71) Applicant: GEMPLUS, 13420 Gémenos (FR)
(72) Inventor: Fidalgo, Jean-Christophe, 13420, GEMENOS (FR)

(57) **Abstract**

The present invention relates to an electronic device manufacturing method, said method comprising the following steps:
- reading (A) information marking laid out or displayed on the device,
- operating (B) a manufacturing step according to this information,

The method is characterized in that said information (7) is made visible upon activation.

The invention relates also to corresponding device.

## Description

The invention relates to a method for the implementation of a manufacturing step of an electronic device corresponding to information taken or detected on a device sub part and relates also to the obtained device.

The invention may be applicable in a context of traceability and/or matching between electrical and graphical personalization of a smart device.

The invention is applicable namely for any marking to be made on display card for the purpose of traceability and/or personalization.

The device according to the invention is preferably an electronic device comprising an external surface and an apparent component visible at least partly from the outside of the device.

More particularly according to a preferred application, the smart object is a smart object of the multi component type. The device aimed by the invention implements preferably a "one time password" (OTP) function.

By the word "multi component" are concerned the entire portable objects or devices which contain several components embedded in the object body such as display, sensors (fingerprint for instance), battery (or other power source), switch, keyboard, magnetic stripe emulation device...

The smart object as multi component is preferably a smart card and also preferably including a zone namely transparent showing part of one component on the surface of an active module or device.

This invention belongs to the field of the obtained portable object. Portable objects comprising integrated circuit like cards also called smart cards are small plastic devices which contain one or more embedded integrated circuits. A card with integrated circuit can be for example a memory card or a microprocessor card called also microprocessor chip-card.

In order to simplify the application drafting, the word manufacturing used in the present application will also include a traceability operation.

### Prior art:

The first solution available for the purpose of matching between electrical and graphical personalization is to add on an active module or device some electrical dedicated contacts which are placed at the location of card standard ISO contacts.

Extra operation of card milling, module gluing and connecting are required to add these dedicated contacts. When the card has to be personalised, an active module number is read using the ISO contacts, the corresponding personal data is read in a file and then the graphical personalization is performed. The magnetic stripe (if present) is also written during this operation.

The drawbacks of this solution are extra costs operations, some rejections and the ISO contacts used for personalization are not available to integrate a standard (EMV) banking chip.

The second solution available for that purpose is to integrate on the active module or device an RFID tag code which supports a unique code. When the card has to be personalised, the RFID tag is read, the corresponding personal data are read in a file and then the graphical personalization is performed.
A magnetic stripe (if present) is also written during this operation. The drawbacks of this solution are to require the integration and expenses of an RFID chip on the device and a RFID reader on the card personalisation equipment.

### Problem to be solved:

For the cards which offer an OTP (One Time Password) function, the microcontroller which supports the OTP application has to be electrically personalised with OTP data. This operation is made using personalization contact pads. The obtained active device is embedded to form an inlay and then a card is made with this inlay. To perform a graphical personalization of the card a matching has to be done with data written in the microcontroller of the active module but after embedding there is no more access to the contact pads.

Therefore, a first general problem to solve is to find a way to write information on an electronic device with no dedicated electric contacts and subsequently retrieve this information for the purpose of carrying on a subsequent manufacturing step dependant from this information, in a manner which does not alter the external aspect of the device.

A second problem to solve is to find the above way knowing that before subsequent manufacturing step, there will be a step of laminating or protecting the electronic device or its components with at least one coating on the components except at least a surface of a component.

The purpose of the invention is therefore namely to avoid this identified drawbacks. Offer a simple, cheap and industrial solution for multi-component cards traceability and matching for personalization.

And in a preferred embodiment the device receives transparent overlay over the whole surface which would exclude all solution aiming to remove afterwards a written number on the component surface.

### Invention proposed:

The invention lies in one preferred embodiment in printing a unique number or code, namely with a UV visible ink, directly on the component intended to remain apparent before embedding; or displaying the number on a display when provided; and during active module electrical personalization, this number or code is then read on the card to perform a subsequent corresponding to the code operation such as writing on a magnetic stripe and/or a graphical personalization according to this read code.

Therefore, one object of the present invention is an electronic device manufacturing method, said method comprising the following steps:
- reading information marking laid out or displayed on the device,
- operating a step corresponding to this information,
characterized in that said information is made visible upon activation.

According to a particular way to carry on the method, the information marking includes ink visible through ultraviolet light (UV).

The method has the advantage to be easy and cost effective. This solution can be used for all the multi component cards which have a component intended to be at least partially visible from the outside of the card: display, sensor, solar cell...

In addition, this solution to the multi component cards personalization matching issue does not require any additional element, such as an antenna and RFID interface on the active module.

During personalization step, the caught number (or code) along with the corresponding personal data are read in a file of a computer unit and a subsequent operation associated to the code, such graphical and magnetic stripe personalization, is performed.

According to a particular way, a unique number or code with a UV visible ink is printed directly on a display screen (namely before embedding and during or following active module electrical personalization). This number or code is then read on the device to perform magnetic stripe and graphical personalization.

Another object of the invention is an electronic device comprising an electric or electronic component having a surface apparent from the exterior of the device and information laid out on said surface; The device is characterized in that said information is non visible under natural light and readable by reading means upon activation.

Other purposes, features and advantages of the invention will appear on reading the description which follows of the implementation of the method and device according to one embodiment of the invention, given as a non-limiting example, and referring to the attached drawings in which:
- Figure 1 illustrates a device according to the invention in an intermediate step and having all the components connected;
- Figure 2-4 illustrate the operations carried out on the device while figure 5 illustrates the corresponding steps of the process according to a particular way of implementation;
- Figure 6 illustrates the obtained device in the final stage according to the invention.

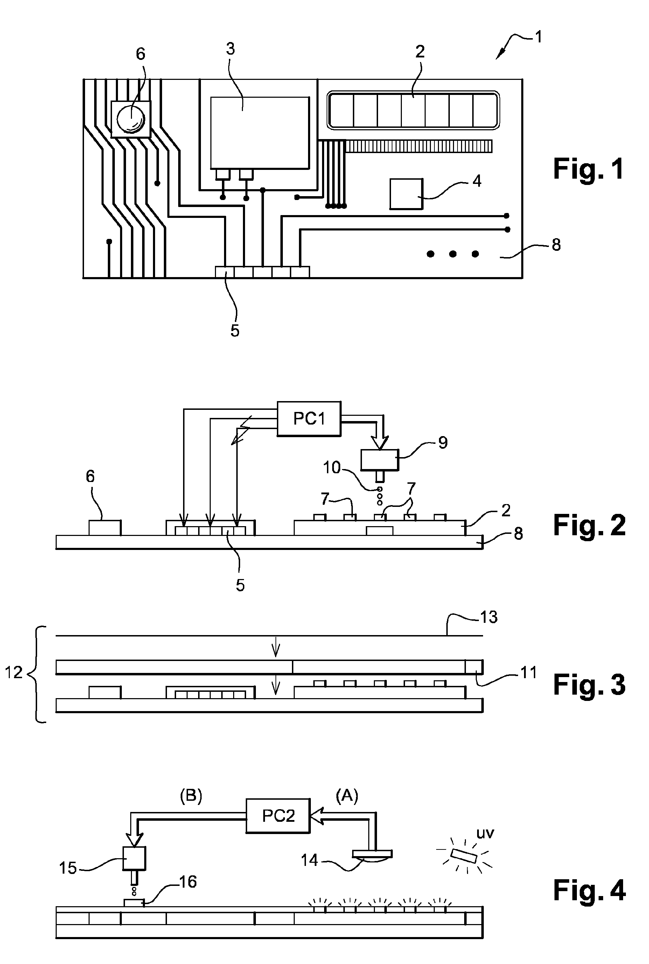

At figure 1, an electronic device 1 is carried out in accordance with a particular way to implement the invention method. The device comprises at least an electric or electronic component 2 intended to have a visible surface from outside and information laid out on said surface. This component is in the example a display 2 but may be any other electric or electronic component or any object surface.

The device 1 is in fact here a multi component card having one time pass word (OTP) function. It comprises to this end on a printed circuit board (PCB) or equivalent, a button 6 to activate the generation of an OTP function, a battery 3, a microcontroller 4 along with memories, and an electrical interface with electrical contacts 5 to allow an electric personalization step or a data loading or/and reading, a display screen to display an OTP number (or in a variant displaying the information associated to subsequent operation).

According to one feature, the information 7 is carried out by a non visible marking with respect to the natural light and is readable by corresponding reading means.

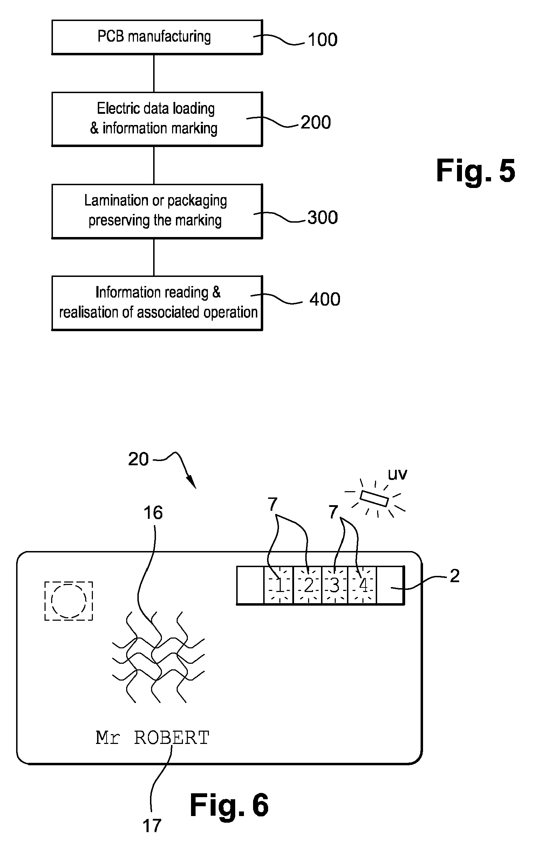

The method according to one preferred implementation of the invention is described thereafter with respect to figures 1 - 4 along with flow-chart of figure 5.

According to one implementation mode, the method for realization of an electronic device, includes the following step of reading (A) a marking including information marked (or displayed) on the device and realizing (B) an operation according to this information.

To above end, the process presents on figure 2, a device in the manufacturing or assembly course (at step 100 and figure 1-2) which is an active module in an intermediate stage as printed circuit board 8, in which all the components are interconnected.

At step 200 as a preliminary step, one carries out the loading of data namely an application program and all requirement to implement an OTP function with the data processing equipment PC1 and its interface connectors contacting interface pads 5; and subsequently or in parallel, one proceeds to the marking of the device (being in its active module or PCB form) with an information 7 which is not visible when exposed to the natural light.

In the example, on figure 2, marking is carried out through an ink-jet printer head 9 using an ink 10 visible under ultraviolet light (UV).

In other examples, the marking can be carried out with a matter visible under activation such as a fluorescent ink, thermo visible or any other activatable matter or material. In some case, the matter may not be visible even through activation but is readable through specific reader means.

Marking has been preferably carried out on a component having a surface intended to be visible from the exterior of the device; in fact, it is here a display 2.

In other examples, the component can be selected among imprint sensor, a photovoltaic cell, a module with electric pads or all other electric or electronic component or element intended to be apparent on the surface of the device.

The information is carried out in connection with data contained or loaded in a memory of the device, in particular during a loading or electric personalization step preliminary or subsequent with the marking step. In the example, a controller unit PC1 may control, namely at the same time or successively, the data loading required to the realization of a OTP function and the marking of said information in connection with the device code or the loaded data using printing head 9.

At step 300 and figure 3, the method implements an operation for covering the device using a generally opaque material 11 except for the aforementioned surface of the marked component.

The covering material 11 may however be transparent and may also cover the marked component. That leads in obtaining an active inlay 12 which corresponds to a pre laminated active module (cold or hot process) which has flat main surfaces.

The method may also include a step for fixing or laying down at least a sheet or a transparent cover (or overlay) 13 on at least the component and preferably on all the surface of the device or on each external face. In case layer 11 is transparent and covers the entire card surface, layer 13 may not be used.

After the active inlay manufacturing, several standard steps may be used to complete the card:
- Sheet collating: printed sheets with transparent overlays will be placed and prefixed on top and above the active inlay
- Lamination: with key parameters as pressure temperature and time. Those parameters will be chosen in order to avoid any component degradation and with no effect on the marking
- Card punching: to get the card at the final dimensions

At step 400 and figure 4, the method implements a subsequent operation which is in fact in the example a graphic personalization; however any other operation is possible such as a magnetic magnetizing of magnetic stripe. For that, the marking is activated by an UV light so as to allow its reading by a reader 14 connected to a second data processing unit PC2 comprising a reading function of the OCR type. According to information read, the PC2 selects a subsequent operation or particularly the type of graphic personalization to carry out.

In the example, one carries out a graphic personalization or specific decoration according to information by inkjet printing controlled by the PC2. All the usual techniques for graphical personalization may be used: thermal transfer, D2T2 (dye diffusion thermal transfer), embossing, indent printing...

The printing and reading stations 14, 15 may be localised in different places so as to act on the card successively.

For cards which offer an OTP function, the microcontroller which supports the application has to be electrically personalised. This operation is made using personalisation contacts 5.
The active module is embedded in an inlay 12 and then a card is made with this inlay.

To perform a graphical personalization of the card, a matching has to be done with data written in the microcontroller of the active module.

At figure 6 a device according to the invention has an element visible from the exterior, for example a display, and has received a manufacturing detectable work for example a graphic personalization item such as guilloches 16, and name 17 (Mr ROBERT).

The element 2 has information 7 code "1234" which appears upon UV exposure.
Thank to the invention, the code written on the element does not alter the function of the element which in the case is the display or might be any element such as a solar photo cell.

In another embodiment, the device is programmed to display such code "1234" during a predetermined length of time sufficiently long in order to enable its reading by the reading means 14 but without the requirement of the UV light and ink jet printing means. The duration may be for example minutes, days, or months programmed in advance.
For this purpose a program application may be loaded in the microcontroller at the first electric personalization step and/or activated using an internal clock of the microcontroller and preferably powered by derived power such as a capacity loaded at electric personalisation step. The display may be also of remanent type or bistable type such that few or no energy is required to maintain the information displayed.
An alternate solution is to display this code "1234" after pressing the activation button for the first time.
Those alternatives may be used when the device comprises a display means.

In the sense of the invention the activation of the information electronically displayed on the screen is made through electronic means for example (hardware and/or software means). For example, a command is sent by data processing means PC1 to the microcontroller 4 to activate the display of given information.

## Claims

1. Electronic device manufacturing method, said method comprising the following steps:
- reading information (A) laid out or displayed on the device (1),
- operating (B) a manufacturing step according to this information,
**characterized in that** said information is made visible upon activation.

2. Electronic device manufacturing method according to claim 1, **characterized in that** information marking includes ink visible through ultraviolet light (UV).

3. Electronic device manufacturing method according to claim 1, **characterized in that** marking (7) is performed with matter which is visible in response to an activation.

4. Electronic device manufacturing method according to claim 1, **characterized in that** said marking is carried out on a component (2) having a surface intended to be readable or apparent from the exterior of the device.

5. Electronic device manufacturing method according to claim 4, **characterized in that** the component (2)is selected among a display, a sensor, a photovoltaic cell, a module with electric contact pads.

6. Electronic device manufacturing method according to any of the preceding claims, **characterized in that** it includes a step of covering the device except on said surface of component with an opaque material or layer (11).

7. Electronic device manufacturing method according to any of the preceding claims, **characterized in that** it includes a step of fixing a sheet or laying down transparent overlay (13) at least on the component (2).

8. Electronic device manufacturing method according to anyone of preceding claims, **characterized in that** the operation includes a graphic personalization (16, 17) or a track magnetizing.

9. Electronic device manufacturing method according to anyone of preceding claims, **characterized in that** the device carries out one time password (OTP) function.

10. Electronic device manufacturing method according to anyone of preceding claims, **characterized in that** the device is a multi-component smart card.

11. Electronic device manufacturing method according to anyone of preceding claims, **characterized in that** it comprises a display (2) and the information (7) is activated to be displayed.

12. Electronic device comprising an electric or electronic component having a surface apparent from the outside of the device and information laid out on the said surface,
**characterized in that** this information is not visible under natural light and is readable by reading means upon activation, said information corresponding to a manufacturing or traceability step.
